# EUROPÄISCHE PATENTSCHRIFT

(11) **EP 2 282 916 B1**
(45) Veröffentlichungstag und Bekanntmachung des Hinweises auf die Patenterteilung: **08.02.2012**
(21) Anmeldenummer: 09753639.5
(22) Anmeldetag: 20.05.2009
(51) Int. Cl.: B60R 22/405, B60R 22/41

(54) **SICHERHEITSGURTAUFROLLER MIT SENSORABSCHALTUNG**
SEATBELT RETRACTOR WITH SENSOR SWITCHING-OFF
ENROULEUR DE CEINTURE DE SÉCURITÉ AVEC DÉCONNEXION DU CAPTEUR

(30) Priorität: 27.05.2008 DE 102008025431
(43) Veröffentlichungstag der Anmeldung: 16.02.2011
(73) Patentinhaber: Autoliv Development AB, 447 83 Vårgårda (SE)
(72) Erfinder: KRÖGER, Doris, 25436 Tornesch (DE); TOHN, Michael, 23816 Leezen (DE); BUTENOP, Klaus, 25379 Herzhorn (DE)
(74) Vertreter: Müller, Karl-Ernst
(86) Internationale Anmeldenummer: PCT/EP2009/003591
(87) Internationale Veröffentlichungsnummer: WO 2009/143984

(56) Entgegenhaltungen:
- EP-A- 1 391 357
- DE-A1- 10 027 134
- DE-A1- 10 360 032
- GB-A- 2 294 384
- GB-A- 2 295 957

## Beschreibung

Die Erfindung betrifft einen selbstsperrenden Gurtaufroller insbesondere für Kraftfahrzeuge, mit einem fahrzeugsensitiven und einem gurtbandsensitiven Steuersystem für die eine in eine gehäusefeste Verzahnung einsteuerbare Zahnscheibe aufweisende Blockiereinrichtung des Gurtaufrollers, wobei das Steuersystem eine sich mit der Gurtwelle drehende, an die Zahnscheibe gekoppelte und zur Ausbildung der gurtbandsensitiven Steuerung masseträge ausgebildete Steuerscheibe mit einer Außenverzahnung zum Eingriff eines Sensorhebels eines am Gurtaufroller angeordneten Fahrzeugsensors umfasst, wobei wenigstens ein durch die Drehung der Gurtwelle gesteuerter, zwischen einer Zuschaltstellung und einer Abschaltstellung schwenkbarer Sperrhebel zur Abschaltung des Fahrzeugsensors in einem Funktionsbereich, in welchem fast der gesamte Sicherheitsgurt auf der Gurtwelle aufgewickelt ist, vorgesehen ist, und wobei eine Einrichtung zur Abschaltung auch der gurtbandsensitiven Steuerung in dem vorgenannten Funktionsbereich des Gurtaufrollers vorgesehen ist.

Ein Gurtaufroller mit den vorgenannten Merkmalen ist in der DE 103 60 032 A1 beschrieben. Um zu verhindern, dass der Blockiermechanismus des Gurtaufrollers anspricht, wenn nach dem Ablegen des Sicherheitsgurtes seitens des Fahrzeuginsassen der Sicherheitsgurt unter der Wirkung der Aufwickelfeder aufgerollt beziehungsweise am Ende des Aufwickelweges abrupt abgebremst wird, ist bei dem bekannten Gurtaufroller bereits eine Abschaltung des gurtbandsensitiven wie auch des fahrzeugsensitiven Steuersystems vorgesehen, so dass ein unerwünschtes Blockieren der Gurtwelle am Ende des Aufwickelweges des Sicherheitsgurtes verhindert ist.

Hierzu ist bei dem bekannten Gurtaufroller auf der Gurtwelle eine sich mit der Gurtwelle drehende Sperrscheibe angeordnet, die mittels einer an ihr ausgebildeten Führungskurve einen ortsfest, relativ zum Gehäuse verschwenkbar gelagerten Sperrhebel steuert, der in einem Funktionsbereich, in welchem fast der gesamte Sicherheitsgurtaufroller der Gurtwelle aufgewickelt ist, unmittelbar auf den mit der Steuerscheibe zusammenwirkenden Sensorhebel des Fahrzeugsensors wirkt und diesen festlegt und dadurch das fahrzeugsensitive Steuersystem abschaltet. Soweit das gurtbandssensitive Steuersystem durch eine mit einer entsprechenden Masseträgheit ausgebildete Steuerscheibe verwirklicht ist, ist zur Abschaltung des gurtbandsensitiven Steuersystems ein weiterer, an der Gurtwelle gelagerter Riegel vorgesehen, der zu seiner Betätigung über eine Führungskulisse an den Sperrhebel zur Abschaltung des Fahrzeugsensors gekoppelt ist und in seiner durch die Sperrlage des Sperrhebels herbeigeführten Blockierstellung in Eingriff mit der Steuerscheibe steht und die Steuerscheibe drehfest mit der Gurtwelle verriegelt.

Bei dem bekannten Gurtaufroller sind zur Abschaltung sowohl des fahrzeugsensitiven wie auch des gurtbandsensitiven Steuersystems verschiedene Hebel vorgesehen, wodurch der Aufbau des Gurtaufrollers kompliziert und der Herstellungsaufwand entsprechend groß ist. Es kommt hinzu, dass die Abschaltung der beiden Steuersysteme nur nacheinander erfolgen kann, weil zunächst die Betätigung des Sperrhebels für den Fahrzeugsensor Voraussetzung für die Steuerung des Riegels für das gurtbandsensitive Steuersystem ist. Da mehrere Steuervorgänge erforderlich sind, ist eine entsprechende Fehlerabhängigkeit nicht auszuschließen.

Weiterhin ist aus der DE 100 27 134 A1 bereits bekannt, bei einem Gurtaufroller mit einer auf einem Wellenfortsatz der Gurtwelle gelagerten masseträgen Steuerscheibe den Fahrzeugsensor an der Innenseite einer das Steuersystem übergreifenden Abdeckkappe anzubringen und den Sensorhebel des Fahrzeugsensors auf die Außenverzahnung der Steuerscheibe zu deren Steuerung zugreifen zu lassen.

Der Erfindung liegt die Aufgabe zugrunde, einen selbstsperrenden Gurtaufroller mit den gattungsgemäßen Merkmalen hinsichtlich der Abschaltung des fahrzeugsensitiven wie auch des gurtbandsensitiven Steuersystems zu vereinfachen und die Sicherheit der Abschaltfunktion entsprechend zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht im einzelnen vor, dass an einer das Steuersystem übergreifenden und am Gurtaufrollergehäuse festgelegten Kappe ein von einem Zählgetriebe gesteuerter Sperrhebel angeordnet ist, der mit einem Schaltvorgang sowohl den an der Kappe festgelegten Fahrzeugsensor als auch eine an der Steuerscheibe aus einer Trägheitssteuerstellung in eine Blockierstellung für die Steuerscheibe auslenkbar gelagerte Trägheitsmasse abschaltet. Soweit im Unterschied zum Stand der Technik die Masseträgheit der Steuerscheibe durch eine an der Steuerscheibe beweglich gelagerte Trägheitsmasse hergestellt ist, ergibt sich dadurch die vorteilhafte Funktion, mittels eines einzigen Sperrhebels sowohl den Fahrzeugsensor als auch die Trägheitsmasse gleichzeitig abzuschalten. Somit ist mit der Erfindung der Vorteil verbunden, dass nur ein einziges Bauteil und ein einziger Schaltvorgang erforderlich sind, um beide Steuersysteme gemeinsam abzuschalten. Da dieser Sperrhebel seinerseits ebenso wie der Fahrzeugsensor an der Kappe angeordnet ist, ist die Kappe Träger mehrerer für die Funktion des Gurtaufrollers erforderlicher Bauteile, so dass der Aufbau des Gurtaufrollers insgesamt ebenfalls vereinfacht ist.

Nach einem Ausführungsbeispiel der Erfindung ist vorgesehen, dass an der Kappe ein sowohl mit einer Außenverzahnung als auch mit einer Innenverzahnung versehener Schaltring drehbar gelagert ist, wobei die Trägheitsmasse der Steuerscheibe in ihrer Blockierstellung für die Steuerscheibe in Eingriff mit der Innenverzahnung des Schaltringes eingesteuert ist und der Sperrhebel von dem Zählgetriebe zwischen einer Eingriffsstellung mit der Außenverzahnung des Schaltringes und einer Freigabestellung dafür umsteuerbar ist. Soweit also die Trägheitsmasse für ihre Funktion als gurtbandsensitive Steuerung einen undrehbar festgelegten Schaltring als Widerlager benötigt, erfolgt die Zuschaltung beziehungsweise die Abschaltung des gurtbandsensitiven Steuersystems dadurch, dass der Sperrhebel den Schaltring entweder festlegt oder aber durchdrehen lässt.

Im Hinblick auf die Zu- bzw. Abschaltung des Fahrzeugsensors ist nach einem Ausführungsbeispiel der Erfindung vorgesehen, dass der Sperrhebel an der Kappe derart angeordnet ist, dass der Sperrhebel in seiner Abschaltstellung für den Fahrzeugsensor den Sensorhebel des Fahrzeugsensors festlegt. Ist der Sensorhebel des Fahrzeugsensors durch den Sperrhebel unbeweglich gehalten, so ist dessen Eingriff mit der Außenverzahnung der Steuerscheibe ausgeschlossen, so dass das fahrzeugsensitive Steuersystem abgeschaltet ist.

Im einzelnen ist nach einem Ausführungsbeispiel der Erfindung daher vorgesehen, dass der Sperrhebel in seiner Abschaltstellung für das gurtbandsensitive und das fahrzeugsensitive Steuersystem außer Eingriff mit der Außenverzahnung des Schaltringes gesteuert ist und in dieser Stellung auch den Sensorhebel des Fahrzeugsensors festlegt.

Gemäß einer Ausführungsform der Erfindung ist der Sperrhebel als auf der Außenseite der Kappe angeordnete, von dem Zählgetriebe hin- und herbewegliche Wippe ausgebildet, die mit einem abgekröpften Funktionsbereich die Kappe in einer Ausnehmung durchgreift und auf die Außenverzahnung des Schaltringes und den Sensorhebel des Fahrzeugsensors zugreift. Hiermit ist eine kompakte Bauweise des Gurtaufrollers ermöglicht.

Nach einem Ausführungsbeispiel der Erfindung ist vorgesehen, dass das Zählgetriebe in einer an sich bekannten Weise aus einer Mehrzahl von an die Gurtwelle gekoppelten, ineinander greifenden Zahnrädern besteht, auf denen die jeweilige Umschaltung des Sperrhebels herbeiführende Schaltnocken angeordnet sind.

In der Zeichnung ist ein Ausführungsbeispiel der Erfindung wiedergegeben, welches nachstehend beschrieben ist. Es zeigen:
- Fig. 1a, b: das gurtbandsensitive und das fahrzeugsensitive Steuersystem eines selbstsperrenden Gurtaufrollers einschließlich der Zu- und Abschaltvorrichtung dafür in einer schematischen Darstellung bei zugeschalteter Sensorik,
- Fig. 2a, b: den Gegenstand der Figuren 1, b bei jeweils abgeschalteter Sensorik,

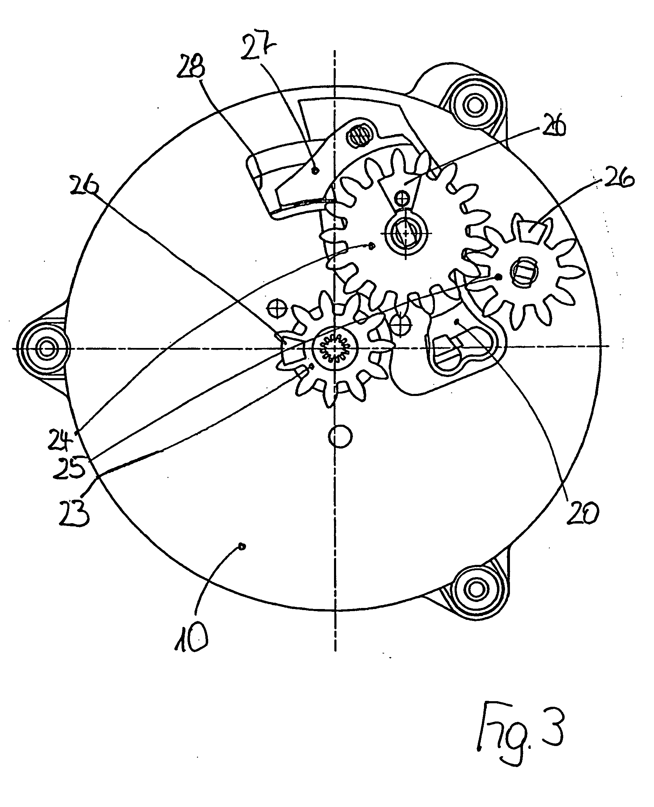

- Fig. 3: eine Draufsicht auf die Kappe des Gurtaufrollers mit daran angeordnetem Zählgetriebe sowie davon gesteuertem Sperrhebel,
- Fig. 4: die Systemseite des Gurtaufrollers gemäß Figuren 1 bis 3 im Schnitt.

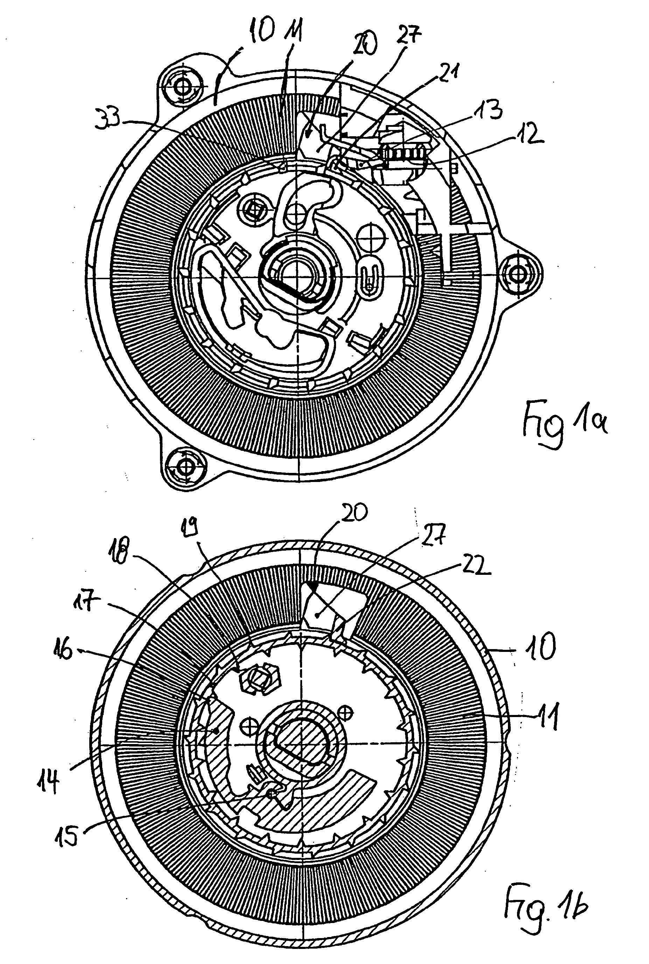

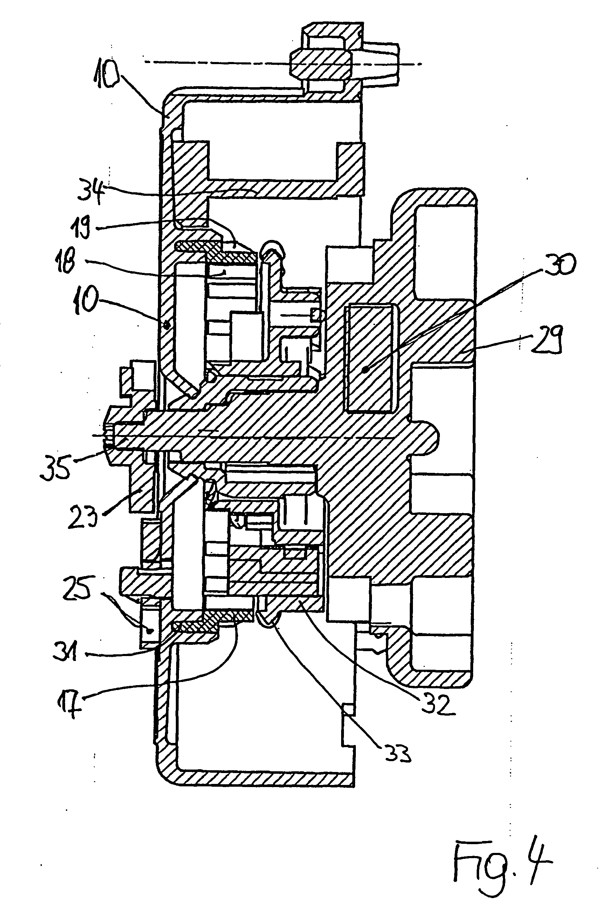

Figuren 1a, b zeigen jeweils die Systemseite eines Gurtaufrollers in einer Sicht von der Gurtwelle her auf die Innenseite einer Kappe 10 als Trägerin von Funktionsteilen des Gurtaufrollers. An der Innenseite der Kappe 10 ist eine Axialverzahnung 11 zum Festlegen eines Fahrzeugsensors 12 mittels eines aus Figur 4 ersichtlichen Adapters 34 in unterschiedlichen Positionen daran ausgebildet. Der Fahrzeugsensor 12 weist einen Sensorhebel 13 auf, der beim Ansprechen des Fahrzeugsensors 12 in Eingriff mit der Außenverzahnung 33 einer in Figuren 1a, b nicht dargestellten Steuerscheibe als Teil des gurtbandsensitiven und des fahrzeugsensitiven Steuersystems gesteuert wird. Diese Steuerscheibe 32 ist aus Figur 4 näher ersichtlich.

Das gurtbandsensitive Steuersystem des Gurtaufrollers wird gebildet durch eine an der Steuerscheibe 32 um eine Lagerung 15 verschwenkbar gelagerte, über die Ebene der Steuerscheibe 32 bis in die von der Kappe 10 umschlossene Ebene vorspringende Trägheitsmasse 14, die an einem äußeren Ende mit einem Blockierzahn 16 versehen ist.

In der Kappe 10 ist ein Schaltring 17 drehbar angeordnet, der mit einer Innenverzahnung 18 sowie mit einer Außenverzahnung 19 versehen ist. Die Innenverzahnung 18 ist dabei so ausgebildet, dass die Trägheitsmasse 14 in ihrer einen, noch zu beschreibenden Funktionsstellung mit ihrem Blockierzahn 16 in Eingriff mit der Innenverzahnung 18 gelangen kann.

An der Kappe 10 ist ein Sperrhebel 20 derart angeordnet, dass der Sperrhebel 20 in seinen beiden, noch zu beschreibenden Funktionsstellungen mittels eines an ihm ausgebildeten Halteansatzes 22 in Eingriff bzw. außer Eingriff mit der Außenverzahnung 19 des Schaltringes 17 steht und dadurch den Schaltring 17 undrehbar festlegt beziehungsweise freigibt. Weiterhin weist der Sperrhebel 20 einen Nocken 21 auf, der derart angeordnet ist, dass der Sperrhebel 20 in seiner entsprechenden Funktionsstellung über die Anlage des Nockens 21 an dem Sensorhebel 13 des Fahrzeugsensors 12 den Sensorhebel 13 derart festlegt, dass dieser nicht in Eingriff mit der Außenverzahnung 33 der Steuerscheibe 32 (Figur 4) gelangen kann.

In Figuren 1a und 1b ist nun die jeweilige Zuschaltstellung für das gurtbandsensitive wie auch das fahrzeugsensitive Steuersystem dargestellt. In dieser Zuschaltstellung steht der Sperrhebel 20 mit seinem Halteansatz 22 in Eingriff mit der Außenverzahnung 19 des Schaltringes 17 und legt diesen dadurch fest. Kommt es in dieser Schaltstellung zu einer entsprechenden Drehbeschleunigung der mit der Gurtwelle 29 gekoppelten Steuerscheibe 32, so wird aufgrund der dadurch bedingten Masseträgheit die Trägheitsmasse 14 ausgelenkt und greift mit ihrem Blockierzahn 16 in die Innenverzahnung 18 des durch den Sperrhebel 20 undrehbar festgelegten Schaltringes 17 ein. Auf diese Weise wird die Steuerscheibe 32 in ihrer Drehbewegung angehalten, und es kommt dadurch zu einer Relativdrehung zwischen Steuerscheibe 32 und Gurtwelle 29, und diese Relativbewegung wird in einer bei gattungsgemäßen Gurtaufrollern an sich bekannten Weise in eine Auslenkung der Zahnscheibe 30 (Figur 4) in eine gehäusefeste Verzahnung und damit in eine Blockierung der Drehbewegung der Gurtwelle 29 umgesetzt.

Gleichzeitig befindet sich gemäß Figur 1a der Nocken 21 des Sperrhebels 20 außerhalb des Bewegungsbereiches des Sensorhebels 13 des Fahrzeugsensors 12, so dass bei entsprechenden Fahrzeugverzögerungen beziehungsweise Fahrzeugbeschleunigungen der Fahrzeugsensor 12 den Sensorhebel 13 in Eingriff mit der Außenverzahnung 33 der Steuerscheibe 32 steuern kann. Hierdurch wird ebenfalls die Steuerscheibe 32 in ihrer weiteren Drehbewegung angehalten, wodurch die Aussteuerung der Zahnscheibe 30 bewirkt wird.

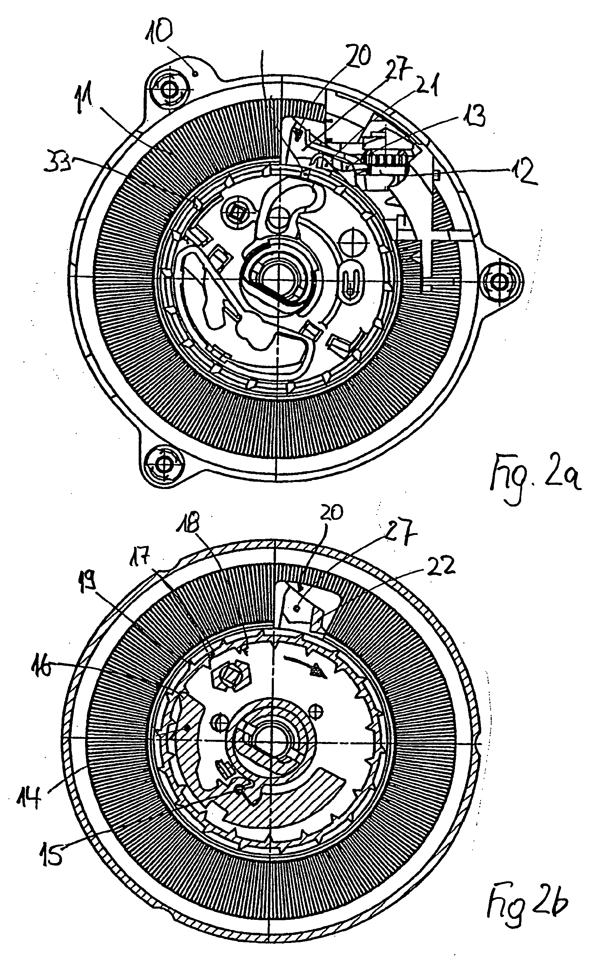

In Figuren 2a und 2b ist entsprechend die gleichzeitige Abschaltung des gurtbandsensitiven und des fahrzeugsensitiven Steuersystem durch die Umsteuerung des Sperrhebels 20 in dessen Abschaltstellung dargestellt. Wie sich dazu aus Figur 2b ergibt, steht der Sperrhebel 20 mit seinem Halteansatz 22 außer Eingriff mit der Außenverzahnung 19 des Schaltringes 17, so dass der Schaltring 17 durchdrehen kann. Gelangt nun der Blockierzahn 16 der Trägheitsmasse 14 in Eingriff mit der Innenverzahnung 18 des Schaltringes 17, so findet die insoweit ausgelenkte Trägheitsmasse 14 kein Widerlager in dem durchdrehenden Schaltring 17, so dass sich Schaltring 17, Trägheitsmasse 14 und Steuerscheibe 32 weiterhin gemeinsam mit der Gurtwelle 29 drehen. Mangels einer Relativbewegung zwischen Steuerscheibe 32 und Gurtwelle 29 findet eine Auslenkung der Zahnscheibe 30 und damit eine Blockierung der Gurtwelle 29 nicht statt. Das gurtbandsensitive Steuersystem ist somit abgeschaltet.

Entsprechend Figur 1a legt in diese Abschaltstellung des Sperrhebels 20 dessen Nocken 21 den Sensorhebel 13 in einer Stellung fest, in welcher der Sensorhebel 13 nicht in Eingriff mit der Außenverzahnung 33 der Steuerscheibe 32 gelangen kann. Insoweit findet bei entsprechenden Fahrzeugverzögerungen beziehungsweise Fahrzeugbeschleunigungen eine Blockierung der Drehbewegung der Steuerscheibe 32 und damit deren Relativdrehung zur Gurtwelle 29 nicht statt. Das fahrzeugsensitive Steuersystem ist abgeschaltet.

Die Hin- und Herschaltung des Sperrhebels 20 zwischen den vorstehend gemäß Figuren 1a, b und Figuren 2a, b beschriebenen Funktionsstellungen des Sperrhebels 20 wird über ein auf der Außenseite der Kappe 10 angeordnetes Zählgetriebe gesteuert. Hierzu durchgreift die Gurtwelle 29, wie aus Figur 4 ersichtlich, die Kappe 10 mit einem Wellenfortsatz 35, auf dem ein sich jeweils mit der Gurtwelle 29 drehendes Wellenzahnrad 23 angeordnet ist. Das Wellenzahnrad 23 steht in ständigem Kämmeingriff mit einem auf dem als hin und her bewegliche Wippe ausgebildeten Sperrhebel 20 angebrachten Wippenzahnrad 24, welches seinerseits in Kämmeingriff mit einem weiteren, an der Kappe 10 drehbar festgelegten Schaltzahnrad 25 steht. An allen drei Zahnrädern 23, 24, 25 sind jeweils Schaltnocken 26 angeordnet, die bei vorgegebenen Auf- bzw. Abwickelzuständen des Gurtbandes in Abhängigkeit von den erfolgten Drehbewegungen der Gurtwelle 29 in Anschlag aneinander gelangen, so dass dadurch der als Wippe ausgebildete Sperrhebel 20 zwischen seinen Funktionsstellungen hin- und herschaltbar ist. Dieses Schaltprinzip ist im Stand der Technik hinreichend bekannt. Der auf der Außenseite der Kappe 10 wippenartig angeordnete Sperrhebel 20 durchgreift mit einem Abkröpfungsbereich 27 die Kappe 10 in einer zugeordneten Ausnehmung 28 und bildet an seinem in die von der Kappe 10 umschlossene Ebene hineinragenden Abkröpfungsbereich 27 den Halteansatz 22 und den Nocken 21 aus.

## Patentansprüche

1. Selbstsperrender Gurtaufroller insbesondere für Kraftfahrzeuge, mit einem fahrzeugsensitiven und einem gurtbandsensitiven Steuersystem für die eine in eine gehäusefeste Verzahnung einsteuerbare Zahnscheibe (30) aufweisende Blockiereinrichtung des Gurtaufrollers, wobei das Steuersystem eine sich mit der Gurtwelle (29) drehende, an die Zahnscheibe (30) gekoppelte und zur Ausbildung der gurtbandsensitiven Steuerung masseträge ausgebildete Steuerscheibe (32) mit einer Außenverzahnung (33) zum Eingriff eines Sensorhebels (13) eines am Gurtaufroller angeordneten Fahrzeugsensors (12) umfasst, wobei wenigstens ein durch die Drehung der Gurtwelle (29) gesteuerter, zwischen einer Zuschaltstellung und einer Abschaltstellung schwenkbarer Sperrhebel (20) zur Abschaltung des Fahrzeugsensors (12) in einem Funktionsbereich, in welchem fast der gesamte Sicherheitsgurt auf der Gurtwelle (29) aufgewickelt ist, vorgesehen ist, und wobei eine Einrichtung zur Abschaltung auch der gurtbandsensitiven Steuerung in dem vorgenannten Funktionsbereich des Gurtaufrollers vorgesehen ist, **dadurch gekennzeichnet, dass** an einer das Steuersystem übergreifenden und am Gurtaufrollergehäuse festgelegten Kappe (10) ein von einem Zählgetriebe gesteuerter Sperrhebel (20) angeordnet ist, der mit einem Schaltvorgang sowohl den an der Kappe (10) festgelegten Fahrzeugsensor (12) als auch eine an der Steuerscheibe (32) aus einer Trägheitssteuerstellung in eine Blockierstellung für die Steuerscheibe (32) auslenkbar gelagerte Trägheitsmasse (14) abschaltet.

2. Selbstsperrender Gurtaufroller nach Anspruch 1, **dadurch gekennzeichnet, dass** an der Kappe (10) ein sowohl mit einer Außenverzahnung (19) als auch mit einer Innenverzahnung (18) versehener Schaltring (17) drehbar gelagert ist, wobei die Trägheitsmasse (14) der Steuerscheibe (32) in ihrer Blockierstellung für die Steuerscheibe (32) in Eingriff mit der Innenverzahnung (18) des Schaltringes (17) eingesteuert ist und der Sperrhebel (20) von dem Zählgetriebe zwischen einer Eingriffsstellung mit der Außenverzahnung (19) des Schaltringes (17) und einer Freigabestellung dafür umsteuerbar ist.

3. Selbstsperrender Gurtaufroller nach Anspruch 1 oder 2, **dadurch gekennzeichnet, dass** der Sperrhebel (20) an der Kappe (10) derart angeordnet ist, dass der Sperrhebel (20) in seiner Abschaltstellung für den Fahrzeugsensor (12) den Sensorhebel (13) des Fahrzeugsensors (12) festlegt.

4. Selbstsperrender Gurtaufroller nach einem der Ansprüche 1 bis 3, **dadurch gekennzeichnet, dass** der Sperrhebel (20) in seiner Abschaltstellung für das gurtbandsensitive und das fahrzeugsensitive Steuersystem außer Eingriff mit der Außenverzahnung (19) des Schaltringes (17) gesteuert ist und in dieser Stellung auch den Sensorhebel (13) des Fahrzeugsensors (12) festlegt.

5. Selbstsperrender Gurtaufroller nach einem der Ansprüche 1 bis 4, **dadurch gekennzeichnet, dass** der Sperrhebel (20) als auf der Außenseite der Kappe (10) angeordnete, von dem Zählgetriebe hin- und herbewegliche Wippe ausgebildet ist, die mit einem abgekröpften Funktionsbereich (27) die Kappe (10) in einer Ausnehmung (28) durchgreift und auf die Außenverzahnung (19) des Schaltringes (17) und den Sensorhebel (13) des Fahrzeugsensors (12) zugreift.

6. Selbstsperrender Gurtaufroller nach einem der Ansprüche 1 bis 5, **dadurch gekennzeichnet, dass** das Zählgetriebe aus einer Mehrzahl von an die Gurtwelle (29) gekoppelten, ineinander greifenden Zahnrädern (23, 24, 25) besteht, auf denen die jeweilige Umschaltung des Sperrhebels (20) herbeiführende Schaltnocken (26) angeordnet sind.

## Claims

1. A self-locking belt retractor, in particular for motor vehicles, having a vehicle-sensitive and a belt-strap-sensitive control system for the locking device of the seatbelt retractor, which locking device has a tooth lock washer (30) which can be inserted into a toothing fixed on the housing, wherein the control system comprises a disc cam (32) which rotates together with the belt shaft (29), is coupled to the tooth lock washer and, in order to form the belt-strap-sensitive control, is designed to have mass inertia, and has an external toothing (33) for the engagement of a sensor lever (13) of a vehicle sensor (12) arranged on the belt retractor, wherein at least one locking lever (20) is provided, which locking lever is controlled by the rotation of the belt shaft (29), can be pivoted between a switching-on position and a switching-off position and is intended for switching off the vehicle sensor (12) in an operational region in which virtually the entire seat belt is wound up onto the belt shaft (29), and wherein a device is provided for also switching off the belt-strap-sensitive control in the above-mentioned operational region of the belt retractor, said belt retractor being **characterised in that** a locking lever (20) which is controlled by a counting mechanism is arranged on a cap (10) which fits over the control system and is fixed to the belt retractor housing, said locking lever, with one switching operation, switching off both the vehicle sensor (12) which is fixed on the cap (10) and an inertia mass (14) which is mounted on the disc cam (32) in a manner such that it can be deflected from an inertia control position into a blocking position for the disc cam (32).

2. A self-locking belt retractor according to claim 1, **characterised in that** an index ring (17) provided with both external toothing (19) and internal toothing (18) is rotatably mounted on the cap (10), the inertia mass (14) of the disc cam (32) being engaged - in its blocking position for the disc cam (32) - with the internal toothing (18) of the index ring (17), and with the locking lever (20) being reversible by the counting mechanism between an engaged position with the external toothing (19) of the index ring (17) and a released position for it.

3. A self-locking belt retractor according to claim 1 or 2, **characterised in that** the locking lever (20) is arranged on the cap (10) in such a way that the locking lever (20) in its switching-off position for the vehicle sensor (12) secures the sensor lever (13) of the vehicle sensor (12).

4. A self-locking belt retractor according to any one of claims 1 to 3, **characterised in that** the locking lever (20) in its switching-off position for the belt-strap-sensitive and vehicle-sensitive control system is disengaged from the external toothing (19) of the index ring (17), and in said position also secures the sensor lever (13) of the vehicle sensor (12).

5. A self-locking belt retractor according to any one of claims 1 to 4, **characterised in that** the locking lever (20) is configured as a rocker which is disposed on the outside of the cap (10) and which can be moved back and forth by the counting mechanism, and which with an operational region (22) that is bent at right angles reaches through an opening (28) in the cap (10) and accesses the external toothing (19) of the index ring (17) and the sensor lever (13) of the vehicle sensor (12).

6. A self-locking belt retractor according to any one of claims 1 to 5, **characterised in that** the counting mechanism consists of a plurality of intermeshing gearwheels (23, 24, 25) which are coupled to the belt shaft (29) and on which the operating cams (26) that bring about the respective reversing of the locking lever (20) are disposed.

## Revendications

1. Enrouleur de ceinture de sécurité autobloquant, en particulier pour des véhicules automobiles, avec un système de commande sensible au véhicule et un système de commande sensible à la bande de ceinture pour le dispositif de blocage présentant une roue dentée (30) pouvant être régulée dans une denture fixée au boîtier de l'enrouleur de ceinture de sécurité, sachant que le système de commande comporte un disque de commande (32) tournant avec l'arbre de ceinture (29), couplé à la roue dentée (30) et réalisé de manière massive pour la réalisation de la commande sensible à la bande de ceinture avec une denture extérieure (33) pour l'engagement d'un levier (13) d'un capteur de véhicule (12) disposé sur l'enrouleur de ceinture de sécurité, sachant qu'est prévu au moins un levier de blocage (20) commandé par la rotation de l'arbre de ceinture (29), pouvant pivoter entre une position de mise en circuit et une position de mise hors circuit pour la mise hors circuit du capteur de véhicule (12) dans une zone fonctionnelle, dans laquelle presque toute la ceinture de sécurité est enroulée sur l'arbre de ceinture (29), et sachant qu'un dispositif pour la mise hors circuit aussi de la commande sensible à la bande de ceinture est prévu dans la zone fonctionnelle précitée de l'enrouleur de ceinture de sécurité, **caractérisé en ce qu'**un levier de blocage (20) commandé par un engrenage de comptage est disposé sur un capot (10) recouvrant le système de commande et fixé sur le boîtier d'enrouleur de ceinture, qui met hors circuit avec un processus de commutation non seulement le capteur de véhicule (12) fixé au capot (10) mais aussi une masse d'inertie (14) logée de manière à pouvoir dévier sur le disque de commande (32) depuis une position de commande d'inertie à une position de blocage pour le disque de commande (32).

2. Enrouleur de ceinture de sécurité autobloquant selon la revendication 1, **caractérisé en ce que** sur le capot (10), un anneau de commutation (17) pourvu non seulement d'une denture extérieure (19) mais aussi d'une denture intérieure (18) est logé de manière rotative, sachant que la masse d'inertie (14) du disque de commande (32) est régulée dans sa position de blocage pour le disque de commande (32) de manière à être en engagement avec la denture intérieure (18) de l'anneau de commutation (17) et la direction du levier de blocage (20) peut être inversée par l'engrenage de comptage entre une position d'engagement avec la denture extérieure (19) de l'anneau de commutation (17) et une position de libération pour celui-ci.

3. Enrouleur de ceinture de sécurité autobloquant selon la revendication 1 ou 2, **caractérisé en ce que** le levier de blocage (20) est disposé sur le capot (10) de telle manière qu'il fixe le levier (13) du capteur de véhicule (12) dans sa position hors circuit pour celui-ci.

4. Enrouleur de ceinture de sécurité autobloquant selon l'une quelconque des revendications 1 à 3, **caractérisé en ce que** le levier de blocage (20) est commandé dans sa position hors circuit pour le système de commande sensible à la bande de ceinture et sensible au véhicule de manière à être désengagé de la denture extérieure (19) de l'anneau de commutation (17) et fixe aussi dans cette position le levier (13) du capteur de véhicule (12).

5. Enrouleur de ceinture de sécurité autobloquant selon l'une quelconque des revendications 1 à 4, **caractérisé en ce que** le levier de blocage (20) est réalisé comme une bascule disposée sur le côté extérieur de la calotte (10), mobile alternativement par l'engrenage de comptage, laquelle bascule traverse par une zone fonctionnelle (27) coudée le capot (10) dans un évidement (28) et accède à la denture extérieure (19) de l'anneau de commutation (17) et au levier (13) du capteur de véhicule (12).

6. Enrouleur de ceinture de sécurité autobloquant selon l'une quelconque des revendications 1 à 5, **caractérisé en ce que** l'engrenage de comptage se compose d'une pluralité de roues dentées (23, 24, 25) s'engrenant, couplées à l'arbre de ceinture (29), sur lesquelles sont disposées des cames de commutation (26) provoquant la commutation respective du levier de blocage (20).
